# EUROPÄISCHE PATENTSCHRIFT

(11) **EP 3 390 970 B1**
(45) Veröffentlichungstag und Bekanntmachung des Hinweises auf die Patenterteilung: **11.12.2019**
(21) Anmeldenummer: 16784178.2
(22) Anmeldetag: 19.10.2016
(51) Int. Cl.: G01D 5/20, G01D 5/244

(54) **LINEARWEGSENSOR**
LINEAR MOUVEMENT SENSOR
CAPTEUR POUR MOUVEMENT LINÉAIRE

(30) Priorität: 15.12.2015 DE 102015225221
(43) Veröffentlichungstag der Anmeldung: 24.10.2018
(73) Patentinhaber: Robert Bosch GmbH, 70442 Stuttgart (DE)
(72) Erfinder: HERRMANN, Ingo, 71292 Friolzheim (DE); UTERMOEHLEN, Fabian, 71229 Leonberg (DE); MERZ, Andreas, 71691 Freiberg Am Neckar (DE); LEIDICH, Stefan, 71277 Rutesheim (DE)
(86) Internationale Anmeldenummer: PCT/EP2016/075019
(87) Internationale Veröffentlichungsnummer: WO 2017/102137

(56) Entgegenhaltungen:
- DE-A1- 4 239 635
- DE-A1-102004 033 083

## Beschreibung

### Gebiet der Erfindung

Die Erfindung betrifft einen Linearwegsensor.

### Stand der Technik

Linearwegsensoren können dazu eingesetzt werden, eine relative Verschiebung zweier Bauelemente entlang eines im Wesentlichen geraden Messwegs zu bestimmen. Diese Verschiebung kann durch eine Position bzw. Relativposition (d.h. eine Zahl) der Bauelemente angegeben werden.

Beispielsweise kann ein Linearwegsensor auf dem Wirbelstromprinzip basieren. Die DE 10 2004 033083 A1 zeigt beispielsweise einen Wirbelstromsensor, der auf einer Außenkontor eines Rads angeordnet ist. Das Messsignal ist eine Frequenzänderung eines Schwingkreises infolge einer Induktivitätsänderung durch Überstreichen einer Sensorspule mit einer elektrisch leitfähigen Spur. Die Sensorspule induziert in der Spur einen Wirbelstrom, der zu einer Induktivitätsänderung der Sensorspule führt, die in dem Schwingkreis verschaltet ist, dessen Resonanzfrequenz sich dadurch ändert. Eine toleranzrobuste Auslegung erfordert in der Regel den Einsatz von mehreren Sensorspulen und mehreren leitfähigen Spuren. Eine Verkippung und eine Veränderung des Abstands der Spur gegenüber der Sensorspule können zu Messungenauigkeiten führen, da der Wirbelstromeffekt eine starke nichtlineare Abstandsabhängigkeit aufweist.

Die WO 2007 000653 A1 zeigt einen Linearwegsensor mit gekoppelten Sensorspulen, die in ein elektrisch leitfähiges Schiebeelement koppeln. Gekoppelte Sensorspulen können eine deutlich höhere Robustheit gegenüber Abstandsänderungen oder Verkippungen zwischen dem Schiebeelement und den Sensorspulen aufweisen, können aber bei einem lateralen Versatz des Schiebeelements (orthogonal zum Messweg) einen höheren Messfehler nach sich ziehen.

### Offenbarung der Erfindung

### Vorteile der Erfindung

Ausführungsformen der vorliegenden Erfindung können in vorteilhafter Weise einen wenig Bauraum beanspruchenden, kostengünstigen und messgenauen Linearwegsensor bereitstellen.

Die Erfindung betrifft einen Linearwegsensor, der im Fahrzeugumfeld (Pkw, Lkw, Motorrad, Nutzfahrzeuge) verwendet werden kann. Beispielsweise kann der Linearwegsensor zur Messung der Einfedertiefe von Zweirädern oder zur Detektion der Gang-Position bei Automatikgetrieben verwendet werden.

Gemäß einer Ausführungsform der Erfindung umfasst der Linearwegsensor ein Basiselement mit einer Sensorspule und einer Erregerspule, die derart angeordnet sind, dass bei Anlegen einer Wechselspannung an die Erregerspule eine Wechselspannung in der Sensorspule induziert wird. Beispielsweise können die Sensorspule und die Erregerspule als Planarspulen in einer Leiterplatte ausgeführt sein, die von dem Basiselement bereitgestellt wird.

Weiter umfasst der Linearwegsensor ein zumindest teilweise elektrisch leitfähiges Schiebeelement, das relativ zum Basiselement in eine Richtung entlang eines Messwegs verschiebbar ist. Das Schiebeelement kann beispielsweise aus Metall gefertigt sein und/oder im Wesentlichen quaderförmig sein, wobei es über seine Seitenkanten an einer von dem Basiselement bereitgestellten Schiene entlang des Messwegs geführt werden kann.

Die Sensorspule weist zwei gegenläufige Teilwindungen auf, wobei das Schiebeelement eine variable Geometrie entlang des Messwegs aufweist, über der die Sensorspule angeordnet ist, so dass eine induktive Kopplung der Teilwindungen der Sensorspule mit der Erregerspule und damit eine Amplitude der in der Sensorspule induzierten Wechselspannung von einer Relativposition des Schiebeelements gegenüber dem Basiselement abhängig ist. Durch die beiden gegenläufigen Teilwindungen, d.h. Teilwindungen, durch die jeweils bei Vorhandensein einer Spannung an der Spule ein Strom in gegenläufige Richtung fließt (beispielsweise links bzw. rechts herum), kann die Erregerspule keine Wechselspannung in der Sensorspule induzieren, wenn die beiden Teilwindungen mit gleicher Induktivität mit der Erregerspule koppeln. Aufgrund der variablen Geometrie des Schiebeelements (wie etwa einer schrägen Nut in dem Schiebeelement) ist die induktive Kopplung der Teilspulen jedoch von der Relativposition des Schiebeelements abhängig. So ist die Amplitude der induzierten Wechselspannung auch von der Relativposition abhängig und aus der Amplitude kann von einer Auswerteeinheit die Relativposition des Schiebeelements berechnet werden.

Die Amplitude der Wechselspannung einer Spule (Korrekturspule und/oder Sensorspule), die von einer Auswerteeinheit gemessen werden kann, kann als Signal dieser Spule aufgefasst werden. Dieses Signal kann dann von der Auswerteeinheit digitalisiert und/oder weiterverarbeitet werden.

Eine Teilwindung einer Spule kann eine oder mehrere Leiterschleifen der Spule umfassen, die (in einer Blickrichtung auf die Öffnung der Spule) die gleiche Fläche umrunden. Ein Kreuzungspunkt von Leiterschleifen einer Spule kann zwei Teilwindungen einer Spule voneinander trennen. Dieser Kreuzungspunkt kann als Verbindungsstelle der beiden Teilwindungen aufgefasst werden.

Weiter umfasst der Linearwegsensor eine Korrekturspule, die über einer entlang des Messwegs konstanten Geometrie des Schiebeelements angeordnet ist, so dass eine induktive Kopplung der Korrekturspule und damit eine Amplitude einer in der Korrekturspule induzierten Wechselspannung von einem lateralen Versatz des Schiebeelements gegenüber dem Basiselement abhängig ist. Unter einem lateralen Versatz kann dabei eine Verschiebung des Schiebeelements relativ zum Basiselement im Wesentlichen orthogonal zum Messweg verstanden werden. So ein lateraler Versatz kann durch Bautoleranzen entstehen.

Bei einem lateralen Versatz des Schiebeelements ändert sich die Kopplung der Sensorspule mit der Erregerspule und die Messung kann verfälscht werden, d.h., die Auswerteeinheit bestimmt eine Relativposition, die einen Offset zur eigentlichen Relativposition aufweisen kann. Die Korrekturspule dient dazu, diesen Offset zu korrigieren bzw. zu kompensieren. Auch in die Korrekturspule wird von einer Erregerspule (beispielsweise einer gesonderten Erregerspule oder der Erregerspule der Sensorspule) eine Wechselspannung induziert, die jedoch aufgrund der konstanten Geometrie (wie etwa einer Nut parallel zum Messweg und/oder einer Kante des Schiebeelements) nicht von der Relativposition entlang des Messwegs, sondern von dem lateralen Versatz abhängt.

Die Auswerteeinheit kann dazu beispielsweise, neben der Amplitude der in der Sensorspule induzierten Wechselspannung, die Amplitude der in der Korrekturspule induzierten Wechselspannung messen und daraus einen Korrekturwert für die Relativposition bestimmen. Auch ist es möglich, die (eventuell mit einem Faktor verstärkte) Wechselspannung aus der Korrekturspule zu der Wechselspannung in der Sensorspule zu addieren, um diese zu korrigieren. In diesem Fall ist die von der Auswerteeinheit gemessene Amplitude der Wechselspannung in der Sensorspule bereits korrigiert.

Insgesamt beansprucht der Linearwegsensor nur einen geringen Bauraum, da die Spulen alle in einer Leiterplatte integriert werden können und/oder das Schiebeelement in einfacher Art und Weise aus einem Metallblock hergestellt werden kann. Auch kann das Schiebeelement durch ein Gehäuses des zu vermessenden Bauteils bereitgestellt werden. Da höhere Einbautoleranzen aufgrund der Kompensation möglich sind, kann die Aufbau- und Verbindungstechnik kostengünstig gestaltet werden.

Gemäß einer Ausführungsform der Erfindung weist die Korrekturspule wenigstens zwei gegenläufige Teilwindungen auf. Genauso wie die Sensorspule kann die Korrekturspule zwei gegenläufige Teilwindungen aufweisen, die die in ihnen induzierte Wechselspannung zumindest teilweise gegeneinander aufheben. Die Anordnung der Teilwindungen und/oder deren Fläche können so eingestellt sein, dass insgesamt keine Wechselspannung in der Korrekturspule induziert wird, wenn kein lateraler Versatz vorhanden ist.

Ist die konstante Geometrie des Schiebeelements eine Kante des Schiebeelements, kann die eine Teilwindung in diesem Fall über dem Schiebeelement und die andere Teilwindung neben dem Schiebeelement angeordnet sein. Eine Verbindungsstelle zwischen den Teilwindungen kann in diesem Fall auf der Kante liegen.

Auch können die Teilwindungen der Korrekturspule nebeneinander quer zum Messweg über der konstanten Geometrie des Schiebeelements angeordnet sein. Auf diese Weise führt ein lateraler Versatz des Schiebeelements zu einer veränderten Überdeckung der konstanten Geometrie bezüglich der Teilwindungen.

Gemäß einer Ausführungsform der Erfindung weist die Korrekturspule vier gegenläufige Teilwindungen auf, von denen zwei innere Teilwindungen über der variablen Geometrie und zwei äußere Teilwindungen jeweils über einer entlang des Messwegs konstanten Geometrie angeordnet sind. Die beiden inneren Teilwindungen können die gleiche Geometrie wie die Sensorspule aufweisen. Insgesamt kann die Korrekturspule so eine Wechselspannung liefern, die zumindest proportional zu der Wechselspannung der Sensorspule ist, wenn kein lateraler Versatz vorliegt. Liegt ein lateraler Versatz vor, weichen die Amplituden der beiden Wechselspannungen voneinander ab. Aus der Differenz der Amplituden kann dann durch die Auswerteeinheit die Offsetkorrektur für die Relativposition des Messwegs berechnet werden.

Gemäß einer Ausführungsform der Erfindung umfasst der Linearwegsensor zwei oder mehr Korrekturspulen. Mit mehreren Korrekturspulen kann einerseits die Bestimmung eines lateralen Versatzes verbessert werden. Optional können auch eine Verkippung und/oder Verdrehung des Schiebeelements gegenüber dem Basiselement bestimmt werden.

Gemäß einer Ausführungsform der Erfindung weist der Linearwegsensor zwei Korrekturspulen mit beispielsweise jeweils lediglich einer Windung auf. In diesem Fall kann die Auswerteeinheit jeweils eine in der jeweiligen Korrekturspule induzierte Wechselspannung messen und aus den beiden Amplituden (beispielsweise durch Differenzbildung) einen lateralen Versatz bzw. eine Offsetkorrektur für die Relativposition berechnen.

Gemäß einer Ausführungsform der Erfindung weist der Linearwegsensor zwei Korrekturspulen auf, die in Reihe geschaltet sind. Werden zwei Korrekturspulen so in Reihe geschaltet, dass sich die in ihnen induzierten Wechselspannungen gegenseitig aufheben, wenn kein lateraler Versatz vorhanden ist, kann aus der in Summe an den beiden Korrekturspulen anliegenden Wechselspannung eine Offsetkorrektur für die Relativposition berechnet werden.

In diesem Fall können die beiden Korrekturspulen, die an gegenüberliegenden Seiten des Schiebeelements angeordnet sein können, die Rolle der Teilwindungen einer Korrekturspule übernehmen. Jedoch können die beiden Korrekturspulen voneinander entfernt angeordnet sein.

Gemäß einer Ausführungsform der Erfindung sind eine oder mehrere der Korrekturspulen mit der Sensorspule in Reihe geschaltet. Auf diese Weise kann bei entsprechender Wahl der Flächen der Spulen bzw. der Teilwindungen der Korrekturspulen und Sensorspule ein durch einen Versatz fehlerhaftes Signal der Sensorspule bereits analog durch Addieren und/oder Subtrahieren des oder der Signale der einen oder mehreren Korrekturspulen korrigiert werden. Je nach Verschaltung der Korrekturspulen und/oder der Sensorspule ist keine mathematische Bearbeitung der digitalisierten Signale zur Korrektur des lateralen Versatzes notwendig. Eine Reihenschaltung der Spulen ergibt automatisch das korrekte Signal.

Gemäß einer Ausführungsform der Erfindung weist der Linearwegsensor zwei Korrekturspulen auf, die jeweils bei einer konstanten Geometrie des Schiebeelements links und rechts der variablen Geometrie angeordnet sind. Auf diese Weise kann mit den Korrekturspulen auch eine Verdrehung und/oder eine Verkippung des Schiebeelements erkannt werden. Die beiden Korrekturspulen können dabei bei beiden Seiten des Schiebeelements angeordnet sein.

Gemäß einer Ausführungsform der Erfindung ist die Erregerspule dazu ausgeführt, in der Sensorspule und in der Korrekturspule eine Wechselspannung zu induzieren. Mit anderen Worten kann eine einzige Erregerspule für die Sensorspule und die eine oder mehreren Korrekturspulen verwendet werden. Die Erregerspule, die lediglich eine Windung aufweisen kann, kann (in Draufsicht auf das Sensorelement) die Sensorspule und/oder die Korrekturspule umgeben.

Gemäß einer Ausführungsform der Erfindung umfasst der Linearwegsensor eine zusätzliche Erregerspule für die Korrekturspule, die dazu ausgeführt ist, in der Korrekturspule eine Wechselspannung zu induzieren. Es ist auch möglich, dass für die eine oder mehreren Korrekturspulen eine oder mehrere zusätzliche Erregerspulen vorgesehen sind. Beispielsweise kann für jede Korrekturspule eine eigene Erregerspule vorgesehen sein. Die Erregerspulen können alle mit der gleichen Wechselspannung versorgt werden.

Gemäß einer Ausführungsform der Erfindung sind die Teilwindungen der Sensorspule nebeneinander quer zum Messweg angeordnet. Insbesondere kann ein Verbindungspunkt der Teilwindungen über eine Mitte der variablen Geometrie des Schiebeelements angeordnet sein. An einem Ende des Messwegs kann die eine Teilwindung maximale induktive Kopplung mit der Erregerspule und die andere Teilwindung minimale induktive Kopplung mit der Erregerspule aufweisen. Am anderen Ende des Messwegs kann es umgekehrt sein.

Die Teilwindungen der Sensorspule können die gleiche Fläche aufweisen und sich so die in die Teilwindungen induzierten Wechselspannungen bei gleicher induktiver Kopplung mit der Erregerspule aufheben.

Gemäß einer Ausführungsform der Erfindung weist der Linearwegsensor zwei Sensorspulen mit jeweils zwei gegenläufigen Teilwindungen auf, wobei die beiden Sensorspulen nebeneinander quer zum Messweg über der variablen Geometrie des Schiebeelements angeordnet sind. Auf diese Weise kann die (unkorrigierte) Relativposition des Messwegs basierend auf zwei Messsignalen berechnet werden.

Gemäß einer Ausführungsform der Erfindung umfasst die variable Geometrie eine schräg zum Messweg verlaufende Nut des Schiebeelements. Diese Nut kann beispielsweise in ein Schiebeelement aus Metall gefräst werden.

Gemäß einer Ausführungsform der Erfindung umfasst die konstante Geometrie eine parallel zum Messweg verlaufende Nut des Schiebeelements. Auch diese Nut kann beispielsweise in ein Schiebeelement aus Metall gefräst werden.

Es ist jedoch auch möglich, dass bei einem Schiebeelement aus Kunststoff eine Nut mit einem Metallelement gefüllt wird, um eine hinsichtlich des Schiebewegs variable und/oder konstante Geometrie bereitzustellen.

Gemäß einer Ausführungsform der Erfindung umfasst die konstante Geometrie eine parallel zum Messweg verlaufende Seitenkante des Schiebeelements. Mit anderen Worten kann eine Korrekturspule über einer (sowieso vorhandenen) Seitenkante des Schiebeelements platziert werden.

Gemäß einer Ausführungsform der Erfindung sind die Erregerspule, die Sensorspule und/oder die Korrekturspule als Planarspule in einer Leiterplatte ausgeführt. Die Leiterplatte, die mehrschichtig aufgebaut sein kann, kann Leiterbahnen (in mehreren Ebenen) aufweisen, durch die die Spulen geformt sind.

Ideen zu Ausführungsformen der vorliegenden Erfindung können unter anderem als auf den nachfolgend beschriebenen Gedanken und Erkenntnissen beruhend angesehen werden.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1A zeigt schematisch eine Draufsicht auf einen Linearwegsensor gemäß einer Ausführungsform der Erfindung.
Fig. 1B zeigt schematisch den Linearwegsensor aus der Fig. 1A im Querschnitt.
Fig. 2 zeigt schematisch einen Linearwegsensor gemäß einer weiteren Ausführungsform der Erfindung.
Fig. 3 zeigt schematisch einen Linearwegsensor gemäß einer weiteren Ausführungsform der Erfindung.
Fig. 4 zeigt schematisch einen Linearwegsensor gemäß einer weiteren Ausführungsform der Erfindung.
Fig. 5 zeigt schematisch einen Linearwegsensor gemäß einer weiteren Ausführungsform der Erfindung.
Fig. 6 zeigt schematisch einen Linearwegsensor gemäß einer weiteren Ausführungsform der Erfindung.
Fig. 7 zeigt schematisch einen Linearwegsensor gemäß einer weiteren Ausführungsform der Erfindung.
Fig. 8 zeigt schematisch einen Linearwegsensor gemäß einer weiteren Ausführungsform der Erfindung.
Fig. 9 zeigt schematisch einen Linearwegsensor gemäß einer weiteren Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

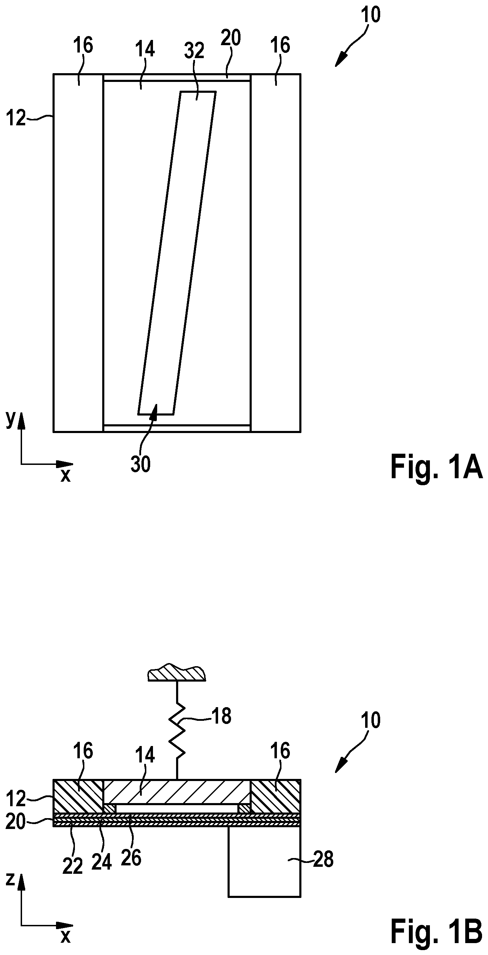

Fig. 1A und 1B zeigen einen Linearwegsensor 10 von oben und im Querschnitt. Der Linearwegsensor umfasst ein Basiselement 12 und ein bezüglich des Basiselements 12 in einer y-Richtung verschiebbares Schiebeelement 14, das von einer seitlichen Führung 16 des Basiselements 12 geführt ist. Ein Messweg des Linearwegsensors 10 verläuft entlang der y-Achse.

Die seitliche Führung verhindert (im Wesentlichen) eine Bewegung des Schiebeelements in x-Richtung. Beispielsweise kann das Schiebeelement von einer Feder 18 gegen das Basiselement 12 gedrückt werden und/oder so im Wesentlichen in der z-Richtung fixiert sein.

Das Basiselement 12 umfasst eine Leiterplatte 20, auf der beispielsweise zwei quaderförmige Kunststoffelemente als seitliche Führung 12 befestigt sind. Die seitliche Führung 12 kann beispielsweise aus einem elektrisch nicht leitfähigen Material (z.B. Kunststoff wie PA612) gefertigt sein.

In und/oder auf der Leiterplatte 20 sind eine Erregerspule 22, eine Sensorspule 24 und eine Korrekturspule 26 als Planarspulen bereitgestellt, die beispielsweise durch Leiterbahnen einer mehrschichtigen Leiterplatte 20 ausgeführt sein können.

Weiter kann an dem Basiselement 12 bzw. an der Leiterplatte 20 eine Steuerung bzw. Auswerteeinheit 28 befestigt sein, die dazu ausgeführt ist, die Erregerspule 22 mit einer Wechselspannung zu bestromen und aus Signalen der Sensorspule 24 und der Korrekturspule 26 eine Relativposition des Schiebeelements 14 gegenüber dem Basiselement 12 zu bestimmen. Alternativ dazu kann die Auswerteeinheit 28 auch lediglich über ein Kabel mit dem Linearwegsensor 10 verbunden sein.

Das Schiebeelement 14 kann beispielsweise etwa 0,5 mm von der Leiterplatte 20 entfernt angeordnet sein und/oder kann eine bezüglich der Relativposition des Schiebeelements 14 gegenüber dem Basiselement 12 variable Geometrie 30 in der Form einer gegenüber dem Messweg bzw. der y-Richtung schrägen Nut 32 in dem Schiebeelement 14 aufweisen, die eine induktive Kopplung der Erregerspule 22 mit der Sensorspule 24 beeinflusst.

Beispielsweise kann das im Wesentlichen quaderförmige Schiebeelement 14 aus einem elektrisch leitenden Material (wie etwa Metall) bestehen und/oder die Nut 32 kann als Fräsung in dem Schiebeelement 14 vorgesehen sein. Es ist aber auch möglich, dass das Schiebeelement aus einem elektrisch nicht leitenden Material (wie etwa Kunststoff) gefertigt ist und die Nut 32 mit einem elektrisch leitenden Material gefüllt ist.

Durch das Schiebeelement 14 wird somit eine induktive Kopplung zwischen der Erregerspule 22 und Sensorspule 24 in Abhängigkeit von der Relativposition beeinflusst. Über eine Bestimmung der induktiven Kopplung ist eine Rückrechnung auf die Relativposition möglich.

Die nun folgenden Figuren zeigen Ausführungsformen von Spulenlayouts, die mit dem Linearwegsensor 10 aus den Fig. 1A und 1B verwendet werden können.

Bei der Fig. 1 weist die Sensorspule 24 zwei gleichflächige Teilwindungen 34a, 34b auf, die gegenläufig orientiert sind. Die Erregerspule 22 umgibt die Sensorspule 24 und die beiden Teilwindungen 34a, 34b. Mit anderen Worten befindet sich im Innenbereich der Erregerspule 22 die Sensorspule 24, die im Allgemeinen aus einer gleichen Anzahl an rechts- und links-orientierten Teilwindungen 34a, 34b bestehen kann.

Die Erregerspule 22 kann von der Auswerteeinheit 28 mit einer Wechselspannung beaufschlagt werden und erzeugt dann ein elektromagnetisches Feld. Die Amplitude der von der Auswerteeinheit 28 bereitgestellten Wechselspannung kann bei 0.5 V bis 10 V und beispielsweise bei 1.5 V liegen. Die Frequenz der Wechselspannung kann im Bereich von 1 MHz bis 10 MHz, beispielsweise bei 5 MHz liegen.

Die Sensorspule 24 kann so angeordnet sein, dass ein Kreuzungspunkt 35 der Verbindungen der Teilwindungen 34a, 34b im Mittelpunkt der Erregerspule 24 und/oder auf einer Symmetrielinie des Schiebeelements 14 platziert ist.

Wenn nun kein Schiebeelement 14 vorhanden ist, wird in die rechts- und linkslaufenden Teilwindungen 34a, 34b jeweils eine gleich große Spannung unterschiedlichen Vorzeichens induziert. Die Summe aller Teilspannungen ergibt demnach Null. Dies hat zusätzlich den Vorteil, dass auch Störungen infolge von äußeren nahezu homogenen elektromagnetischen Feldern zu einer Gesamtspannung von Null führen und dementsprechend ein Messergebnis nicht stören.

Die induktive Kopplung zweier Spulen (beispielsweise der Erregerspule 22 mit der Sensorspule 24) kann beispielsweise über das Amplitudenverhältnis zwischen induzierter Wechselspannung in der einen Spule (wie etwa der Sensorspule 24) und der angelegten Spannung an der anderen Spule (wie etwa der Erregerspule 22) bestimmt werden.

Unter der Annahme, dass die Erregerspule 22 als rechts-laufend definiert ist, wird in die erste Teilwindung 34a (mit einem Plus gekennzeichnet) eine Spannung gleichen Vorzeichens induziert und in die zweite Teilwindung 34b (mit einem Minuszeichen gekennzeichnet) eine Spannung entgegengesetzten Vorzeichens induziert.

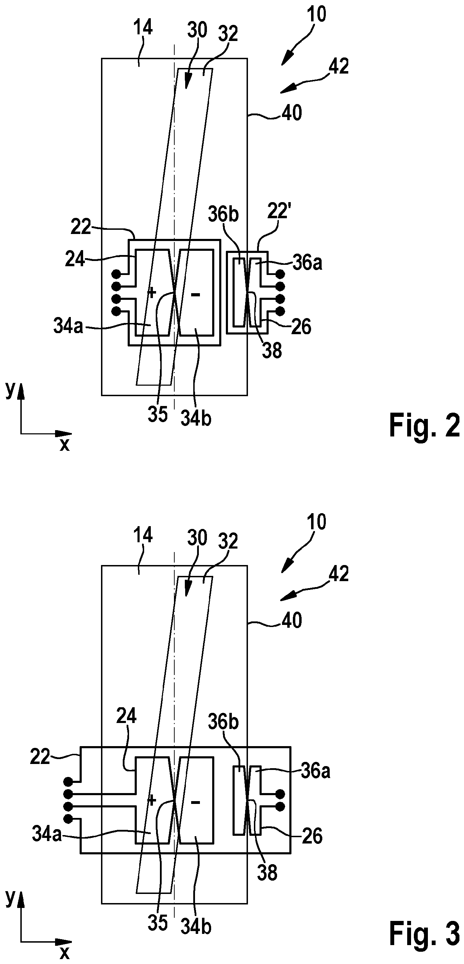

Prinzipiell gilt, dass die induktive Kopplung in dem Bereich, der von einer metallischen Fläche überdeckt wird, minimal ist und in dem Bereich, der unter einer Aussparung (wie etwa der Nut 32) liegt, maximal ist. Auf diese Weise wird die in der ersten Teilwindung 34a induzierte Spannung immer kleiner, je weiter die Sensorspule 24 und die Erregerspule 22 aus Sicht der Fig. 2 nach oben geschoben (bzw. das Schiebeelement 14 nach unten) werden. Umgekehrt wird die in der ersten Teilwindung 34b induzierte Spannung immer größer, wenn die beiden Spulen 22, 24 nach oben geschoben werden. Auf diese Weise kann aus dem Amplitudenverhältnis der Wechselspannung in der Erregerspule 22 und der Summenspannung der beiden Teilwindungen 34a, 34b, die als Gesamtspannung in der Sensorspule 24 induziert wird, durch die Auswerteeinheit 28 die Relativposition des Schiebeelements 14 bezüglich des Basiselements 12 bestimmt werden.

Kommt es jedoch nun zu einem lateralen Versatz des Schiebeelements 14 (in x-Richtung), beispielsweise durch Bauteiltoleranzen, so liegt eine induktive Kopplung zwischen der Erregerspule 22 und der Sensorspule 24 vor, die bei der Rückrechnung zu einer anderen als der wirklich korrekten Relativposition führt. Dies kann einen Messfehler nach sich ziehen, der für manche Anwendungen nicht tolerierbar ist.

Um diesen lateralen Versatz zu bestimmen und den Messfehler (zumindest teilweise) zu korrigieren, wird nun die Korrekturspule 26 verwendet, die genauso wie die Sensorspule 22 zwei gegenläufige Teilwindungen 36a, 36b aufweist. Ein Kreuzungspunkt 38 der Teilwindungen 36a, 36b, bei dem die eine Teilwindung 36a in die andere Teilwindung 36b übergeht, befindet sich dabei im Optimalfall auf einer Seitenkante 40 des Schiebeelements 14, die parallel zur y-Richtung und damit parallel zum Messweg verläuft. Eine gesonderte Erregerspule 22', die mit der gleichen Wechselspannung wie die Erregerspule 22 versorgt werden kann, umgibt die Korrekturspule 26. Die Korrekturspule 26 ist so ausgeführt und/oder angeordnet, dass sie lediglich die Seitenkante 40 des Schiebeelements 14 sensiert und nicht die variable Geometrie 30 in der Mitte des Schiebeelements 14.

Die Seitenkante 40 des Schiebeelements 14 kann als konstante Geometrie 42 entlang des Messwegs aufgefasst werden, da sich bei einer Verschiebung des Schiebeelements 14 in y-Richtung die induktive Kopplung der Erregerspule 22' mit der Korrekturspule 26 nicht ändert.

Ergibt sich nun ein lateraler Versatz zwischen dem Schiebeelement 14 und dem Basiselement 12, führt dies zu einer Änderung der induktiven Kopplung zwischen der Erregerspule 22' und der Korrekturspule 26, die analog wie bei der Sensorspule 24 von der Auswerteeinheit 28 über eine Änderung des Amplitudenverhältnisses zwischen der induzierten Wechselspannung und der beaufschlagten Wechselspannung ermittelt werden kann.

Damit steht der Auswerteeinheit 28 eine weitere Information zur Verfügung, mit der der durch den lateralen Versatz entstandene Messfehler korrigiert werden kann. Dies kann beispielsweise durch Addieren des Amplitudenverhältnisses basierend auf der Korrekturspule 26 multipliziert mit einem Faktor zum Amplitudenverhältnis basierend auf der Sensorspule 24 geschehen.

Obwohl nur jeweils eine Leiterbahn dargestellt ist, können die Erregerspule 22, die Sensorspule 24, die Korrekturspule 26 und die gesonderte Erregerspule 22' als auch die in den folgenden Figuren gezeigten Spulen mit mehreren Leiterschleifen und/oder in mehreren Ebenen der Leiterplatte 20 realisiert sein.

Die Fig. 2 zeigt eine Anordnung mit separaten Erregerspulen 22, 22' für die Sensorspule 24 und die Korrekturspule 26. Mit einer separaten Erregerspule 22' kann verhindert werden, dass die separate Erregerspule 22' die Korrekturspule 26 in die Sensorspule 24 koppelt. Es kann auch Abhilfe durch ein Zeitmultiplex geschaffen werden, d.h., dass die Erregerspulen 22, 22' nacheinander und abwechselnd mit Wechselspannung versorgt werden.

Wie die Fig. 3 zeigt, können die Sensorspule 24 und die Korrekturspule 26 auch von einer gemeinsamen Erregerspule 22 umgeben sein.

Kann aufgrund der Führung 16, 18 des Schiebeelements 14 eine Verkippung des Schiebeelements 14 um die y-Richtung bzw. y-Achse ausgeschlossen werden (z.B. durch die Feder 18, die in z-Richtung das Schiebeelement 14 in seiner Position hält), so kann eine einzige Korrekturspule 26 ausreichen, um einen durch Bauteiltoleranzen entstehenden Messfehler zu kompensieren. Dadurch kann der Linearwegsensor 10 verhältnismäßig klein ausgeführt werden.

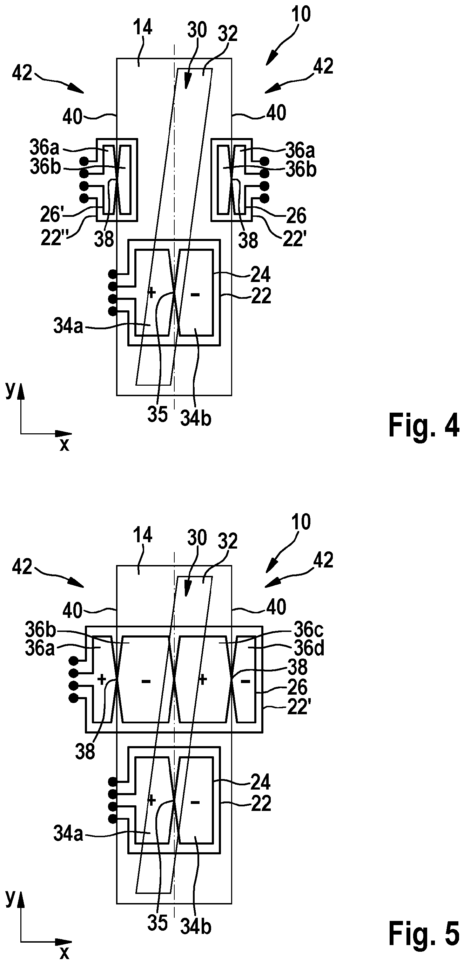

Die Fig. 4 zeigt, dass auch mehrere Korrekturspulen 26, 26' verwendet werden können, die beispielsweise jeweils eine gesonderte Erregerspule 22', 22" aufweisen können. Die Korrekturspulen 26, 26' können so angeordnet sein, dass jeweils ihre halbe Fläche bei einem lateralen Versatz von Null abgedeckt ist. Die Anschlüsse der Erregerspulen 22', 22" können so verschaltet sein, dass ohne lateralen Versatz die eine Korrekturspule 26 ein maximal positives Signal und die andere Korrekturspule 26' ein maximal negatives Signal liefert. Sind die Abmessungen beider Korrekturspulen 26, 26' identisch, ergibt das Summensignal in diesem Fall Null. Bei einem lateralen Versatz des Schiebeelements 14 in x-Richtung bleibt das Summensignal weiterhin Null, allerdings kann aus den Einzelamplituden der in den beiden Korrekturspulen 26, 26' induzierten Wechselspannungen auf den lateralen Versatz des Schiebeelements 14 rückgerechnet werden. Wird das Summensignal verschieden von Null, so liegt eine Verkippung (Tilt) des Schiebeelements 14 um die y-Achse vor. Auch diese Toleranz kann durch die Korrekturspulen 26, 26' bestimmt und anschließend rechnerisch durch die Auswerteeinheit 28 korrigiert werden.

Die Kreuzungspunkte/Übergangspunkte 38 zwischen den Teilwindungen 36a und 36b der beiden Korrekturspulen 26a, 26' können sich auf den gegenüberliegenden Seitenkanten 40 des Schiebeelements 14 befinden.

Obwohl die Sensorspule 24 und die Korrekturspulen 26, 26' entlang des Messweges zueinander versetzt dargestellt sind, können sie in unterschiedlichen Lagen einer Leiterplatte 20 übereinander angeordnet sein. Es ist auch möglich, dass eine einzige umlaufende Erregerspule 22 verwendet wird, mit der alle Sensorspulen 24 und Korrekturspulen 26 gekoppelt sind.

Die Fig. 5 zeigt, dass die Korrekturspule 26 zwei äußere Teilwindungen 36a, 36d und zwei innere Teilwindungen 36b, 36c aufweist, die abwechselnd unterschiedliche Orientierungen aufweisen. Die zwei inneren Teilwindungen 36b, 36c entsprechen in ihrer Fläche den beiden Teilwindungen 34a, 34b der Sensorspule 24.

Damit sind die in den Teilwindungen 36b, 36c induzierten Wechselspannungen der Korrekturspule 26 vom Betrag her genauso groß wie die in den Teilwindungen 34a, 34b der Sensorspule 24 der induzierten Wechselspannungen. Lediglich die Vorzeichen der in den Teilwindungen 36b, 36c induzierten Wechselspannungen der Korrekturspule 26 sind entgegengesetzt zu den in den Teilwindungen 34a, 34b der Sensorspule 24 induzierten Wechselspannungen.

Die Kreuzungspunkte/Übergangspunkte 38 zwischen den Teilwindungen 36a und 36b bzw. zwischen den 36c und 36d können sich auf den gegenüberliegenden Seitenkanten 40 des Schiebeelements 14 befinden.

Die in der Korrekturspule 26 induzierte Wechselspannung enthält neben einer Information über die Relativposition in y-Richtung auch eine Information über den lateralen Versatz des Schiebeelements 14 in x-Richtung. Die Information über den lateralen Versatz kann beispielsweise durch Subtrahieren der Wechselspannungen in den beiden Spulen 24, 26 extrahiert werden. Damit kann die Bestimmung der Relativposition mit der Sensorspule 24 plausibilisiert werden und/oder der laterale Versatz kompensiert werden.

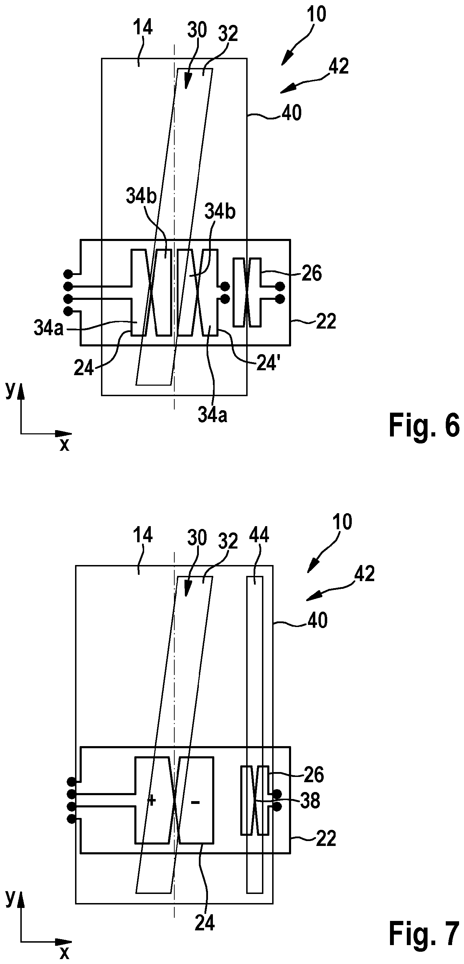

Fig. 6 zeigt, dass der Linearwegsensor 10 auch zwei Sensorspulen 24, 24' aufweisen kann. Jede der Sensorspulen 24, 24' kann jeweils zwei Teilwindungen 34a, 34b gleicher Fläche und/oder entgegengesetzter Orientierung umfassen.

Die eine Sensorspule 24 kann einen Bereich links einer Symmetrieachse des Schiebeelements 14 und die andere Sensorspule kann einen Bereich rechts der Symmetrieachse bedecken. Die Breite jeder Sensorspule 24, 24' kann in etwa der Breite der Nut 32 entsprechen. So wird eine maximale Auflösung des Linearwegsensors 10 erreicht, da jede Sensorspule 24, 24' beim Abfahren des kompletten Messwegs an einer Position voll und an einer anderen Position gar nicht überdeckt ist.

Die Fig. 7 zeigt eine alternative Ausführung einer entlang des Messwegs konstanten Geometrie 42, die mit einer parallel zum Messweg angeordneten Nut 44 umgesetzt ist. Die Korrekturspule 26 ist dabei über der Nut 44 angeordnet.

Sollte beispielsweise der Einbauort des Schiebeelements 14 nicht erlauben, dass eine oder mehrere Korrekturspulen 24 über der Seitenkante 40 des Schiebeelements angeordnet sind, so kann in das Schiebeelement 14 eine zweite Nut 44 eingebracht werden, deren Geometrie entlang des Messweges konstant bleibt. Wird die Korrekturspule 26 derart angeordnet, dass der Kreuzungspunkt 38 auf einer Mittelachse der Nut 44 liegt, liefert die Korrekturspule 26 ohne lateralen Versatz immer einen Spannungswert von Null. Die Richtung eines Versatzes in x-Richtung kann über das Vorzeichen der Spannung der Korrekturspule 26 und der Betrag des Versatzes kann über die Amplitudenhöhe bestimmt werden.

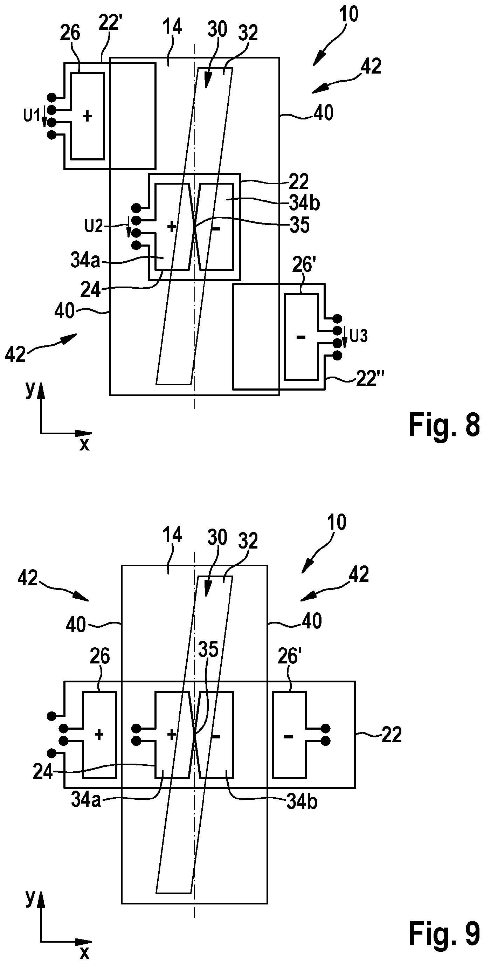

Die Fig. 8 zeigt einen Linearwegsensor 10 mit zwei Korrekturspulen 26, 26', die jeweils lediglich eine Windung aufweisen. Die Sensorspule 24 und die beiden Korrekturspulen 26, 26' weisen jeweils eine Erregerspule 22, 22', 22" auf.

Die Fläche jeder dieser Windungen kann identisch zu den Flächen der Teilwindungen 34a, 34b der Sensorspule 24 sein. Weiterhin können die Erregerspulen 22, 22', 22" eine identische Form aufweisen. Wird nun als Messspannung nicht die Spannung U2 der Sensorspule 24, sondern die Summe aller Spannungen U1 (Spannung an der ersten Korrekturspule 26), U2 und U3 (Spannung an der zweiten Korrekturspule 26') verwendet, wird ein lateraler Versatz automatisch kompensiert. Dazu können alle drei Spulen 24, 26, 26' in Reihe geschaltet werden, so dass die Korrekturspulen 26, 26' entgegengesetzt zueinander orientiert sind (angedeutet durch "+" und "-").

Die Fig. 9 zeigt eine Sensorspule 24 und zwei Korrekturspulen 26, 26' analog der Fig. 8, die zusammen von einer Erregerspule 22 umgeben sind. Auch hier können die Spulen 24, 26, 26' bei eine entsprechenden Wahl der Flächen der Teilwindungen 34a, 34b der Sensorspule 24 bzw. Einzelwindungen der Korrekturspulen 26, 26' in Reihe geschaltet werden, um einen Versatz analog zu kompensieren.

Auch können die Windungszahlen der einzelnen Spulen 24, 26, 26' so angepasst werden, so dass die Summe aller Spannungen U1, U2, U3 (beider Korrekturspulen 26, 26' plus der der Sensorspule 24) ohne Schiebeelement 14 Null ist. Auch können die Spannungen erst nach Verstärkung durch eine Elektronik summiert werden. Die Verstärkungsfaktoren sind dabei so ausgelegt, dass die Summe aller Spannungen U1, U2, U3 ohne Schiebeelement Null ist.

Es ist aber auch möglich, den Versatz mit der Auswerteeinheit digital zu kompensieren, indem für jede Spule 24, 26, 26' die Amplitudenhöhe der induzierten Wechselspannung ermittelt wird und die Amplitudenhöhe nach Multiplikation mit einem Faktor aufsummiert wird, um eine korrigierte Amplitudenhöhe für die Sensorspule 24 zu erhalten.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Linearwegsensor (10), umfassend:
ein Basiselement (12) mit einer Sensorspule (24) und einer Erregerspule (22), die derart angeordnet sind, dass bei Anlegen einer Wechselspannung an die Erregerspule (22) eine Wechselspannung in der Sensorspule (24) induziert wird; und
ein zumindest teilweise elektrisch leitfähiges Schiebeelement (14), das relativ zum Basiselement (12) in eine Richtung entlang eines Messwegs verschiebbar ist;
wobei die Sensorspule (24) zwei gegenläufige Teilwindungen (34a, 34b) aufweist;
wobei das Schiebeelement (14) eine variable Geometrie (30) entlang des Messwegs aufweist, über der die Sensorspule (24) angeordnet ist, so dass eine induktive Kopplung der Teilwindungen (34a, 34b) der Sensorspule (24) mit der Erregerspule (22) und damit eine Amplitude der in der Sensorspule (24) induzierten Wechselspannung von einer Relativposition des Schiebeelements (14) gegenüber dem Basiselement (12) abhängig ist;
**gekennzeichnet durch**
eine Korrekturspule (26), die über einer entlang des Messwegs konstanten Geometrie (42) des Schiebeelements (14) angeordnet ist, so dass eine induktive Kopplung der Korrekturspule (26) und damit eine Amplitude einer in der Korrekturspule (26) induzierten Wechselspannung von einem lateralen Versatz des Schiebeelements (14) gegenüber dem Basiselement (12) abhängig ist.

2. Linearwegsensor (10) nach Anspruch 1,
wobei die Korrekturspule (26) wenigstens zwei gegenläufige Teilwindungen (36a, 36b) aufweist; und/oder
wobei die Teilwindungen (36a, 36b) der Korrekturspule (26) nebeneinander quer zum Messweg über der konstanten Geometrie (42) des Schiebeelements (14) angeordnet sind.

3. Linearwegsensor (10) nach Anspruch 1 oder 2,
wobei die Korrekturspule (26) vier gegenläufige Teilwindungen (36a, 36b, 36c, 36d) aufweist, von denen zwei innere Teilwindungen (36b, 36c) über der variablen Geometrie (30) und zwei äußere Teilwindungen (36a, 36d) jeweils über einer entlang des Messwegs konstanten Geometrie (42) angeordnet sind.

4. Linearwegsensor (10) nach einem der vorhergehenden Ansprüche,
wobei der Linearwegsensor (10) zwei Korrekturspulen (26, 26') aufweist; und/oder
wobei die beiden Korrekturspulen (26, 26') lediglich eine Windung aufweisen.

5. Linearwegsensor (10) nach einem der vorhergehenden Ansprüche,
wobei der Linearwegsensor (10) zwei Korrekturspulen (26, 26') aufweist, die jeweils bei einer konstanten Geometrie (42) des Schiebeelements (14) links und rechts der variablen Geometrie angeordnet (30) sind.

6. Linearwegsensor (10) nach einem der vorhergehenden Ansprüche,
wobei der Linearwegsensor (10) zwei Korrekturspulen (26, 26') aufweist, die in Reihe geschaltet sind; und/oder
wobei die Korrekturspule (26, 26') und die Sensorspule (24) in Reihe geschaltet sind.

7. Linearwegsensor (10) nach einem der vorhergehenden Ansprüche,
wobei die Erregerspule (22) dazu ausgeführt ist, in der Sensorspule (24) und in der Korrekturspule (26) eine Wechselspannung zu induzieren; und/oder
wobei die Erregerspule (22) die Sensorspule (24) und/oder die Korrekturspule (26) umgibt.

8. Linearwegsensor (10) nach einem der vorhergehenden Ansprüche,
wobei der Linearwegsensor (10) eine zusätzliche Erregerspule (22') für die Korrekturspule (26) umfasst, die dazu ausgeführt ist, in der Korrekturspule (26) eine Wechselspannung zu induzieren.

9. Linearwegsensor (10) nach einem der vorhergehenden Ansprüche,
wobei die Teilwindungen (34a, 34b) der Sensorspule (24) nebeneinander quer zum Messweg angeordnet sind; und/oder
wobei die Teilwindungen (34a, 34b) der Sensorspule (24) die gleiche Fläche aufweisen.

10. Linearwegsensor (10) nach einem der vorhergehenden Ansprüche,
wobei der Linearwegsensor (10) zwei Sensorspulen (24, 24') mit jeweils zwei gegenläufigen Teilwindungen (34a, 34b) aufweist;
wobei die beiden Sensorspulen (24, 24') nebeneinander quer zum Messweg über der variablen Geometrie (30) des Schiebeelements (14) angeordnet sind.

11. Linearwegsensor (10) nach einem der vorhergehenden Ansprüche,
wobei die variable Geometrie (30) eine schräg zum Messweg verlaufende Nut (32) des Schiebeelements (14) umfasst; und/oder
wobei die konstante Geometrie (42) eine parallel zum Messweg verlaufende Nut (44) des Schiebeelements (14) umfasst; und/oder
wobei die konstante Geometrie (42) eine parallel zum Messweg verlaufende Seitenkante (40) des Schiebeelements (14) umfasst.

12. Linearwegsensor nach einem der vorhergehenden Ansprüche,
wobei die Erregerspule (22), die Sensorspule (24) und/oder die Korrekturspule (26) als Planarspule in einer Leiterplatte (20) ausgeführt sind.

## Claims

1. Linear-displacement sensor (10) comprising:
a base element (12) with a sensor coil (24) and with an excitation coil (22), which are arranged in such a manner that upon application of an AC voltage to the excitation coil (22) an AC voltage is induced in the sensor coil (24); and
an at least partly electrically conductive sliding element (14) which is capable of being shifted relative to the base element (12) in a direction along a measurement path;
wherein the sensor coil (24) exhibits two opposite-sense partial turns (34a, 34b);
wherein the sliding element (14) has a variable geometry (30) along the measurement path, above which the sensor coil (24) is arranged, so that an inductive coupling of the partial turns (34a, 34b) of the sensor coil (24) with the excitation coil (22), and hence an amplitude of the AC voltage induced in the sensor coil (24), is dependent on a relative position of the sliding element (14) in relation to the base element (12);
**characterized by**
a correction coil (26) which is arranged above a geometry (42) of the sliding element (14) which is constant along the measurement path, so that an inductive coupling of the correction coil (26), and hence an amplitude of an AC voltage induced in the correction coil (26), is dependent on a lateral offset of the sliding element (14) in relation to the base element (12).

2. Linear-displacement sensor (10) according to Claim 1,
wherein the correction coil (26) exhibits at least two opposite-sense partial turns (36a, 36b); and/or
wherein the partial turns (36a, 36b) of the correction coil (26) are arranged side-by-side at right angles to the measurement path above the constant geometry (42) of the sliding element (14) .

3. Linear-displacement sensor (10) according to Claim 1 or 2,
wherein the correction coil (26) exhibits four opposite-sense partial turns (36a, 36b, 36c, 36d), of which two inner partial turns (36b, 36c) are arranged above the variable geometry (30), and two outer partial turns (36a, 36d) are each arranged above a geometry (42) which is constant along the measurement path.

4. Linear-displacement sensor (10) according to one of the preceding claims,
wherein the linear-displacement sensor (10) exhibits two correction coils (26, 26'); and/or wherein the two correction coils (26, 26') exhibit only one turn.

5. Linear-displacement sensor (10) according to one of the preceding claims,
wherein the linear-displacement sensor (10) exhibits two correction coils (26, 26') which, in the case of a constant geometry (42) of the sliding element (14), are respectively arranged on the left and on the right of the variable geometry (30) .

6. Linear-displacement sensor (10) according to one of the preceding claims,
wherein the linear-displacement sensor (10) exhibits two correction coils (26, 26') which are connected in series; and/or
wherein the correction coil (26, 26') and the sensor coil (24) are connected in series.

7. Linear-displacement sensor (10) according to one of the preceding claims,
wherein the excitation coil (22) is designed to induce an AC voltage in the sensor coil (24) and in the correction coil (26); and/or
wherein the excitation coil (22) surrounds the sensor coil (24) and/or the correction coil (26).

8. Linear-displacement sensor (10) according to one of the preceding claims,
wherein the linear-displacement sensor (10) includes an additional excitation coil (22') for the correction coil (26), which is designed to induce an AC voltage in the correction coil (26).

9. Linear-displacement sensor (10) according to one of the preceding claims,
wherein the partial turns (34a, 34b) of the sensor coil (24) are arranged side-by-side at right angles to the measurement path; and/or
wherein the partial turns (34a, 34b) of the sensor coil (24) have the same area.

10. Linear-displacement sensor (10) according to one of the preceding claims,
wherein the linear-displacement sensor (10) exhibits two sensor coils (24, 24'), each with two opposite-sense partial turns (34a, 34b);
wherein the two sensor coils (24, 24') are arranged side-by-side at right angles to the measurement path above the variable geometry (30) of the sliding element (14).

11. Linear-displacement sensor (10) according to one of the preceding claims,
wherein the variable geometry (30) includes a groove (32) of the sliding element (14) extending obliquely relative to the measurement path; and/or wherein the constant geometry (42) includes a groove (44) of the sliding element (14) extending parallel to the measurement path; and/or
wherein the constant geometry (42) includes a lateral edge (40) of the sliding element (14) extending parallel to the measurement path.

12. Linear-displacement sensor according to one of the preceding claims,
wherein the excitation coil (22), the sensor coil (24) and/or the correction coil (26) are realized as planar coils in a printed circuit board (20).

## Revendications

1. Capteur de course linéaire (10), comprenant :
un élément de base (12) muni d'une bobine de capteur (24) et d'une bobine d'excitateur (22) qui sont disposées de telle sorte que lors de l'application d'une tension alternative à la bobine d'excitateur (22), une tension alternative est induite dans la bobine de capteur (24) ; et
un élément coulissant (14) au moins partiellement électriquement conducteur, qui peut coulisser dans une direction le long d'une course de mesure par rapport à l'élément de base (12) ;
la bobine de capteur (24) possédant deux enroulements partiels (34a, 34b) en sens inverse ;
l'élément coulissant (14) possédant une géométrie variable (30) le long de la course de mesure, au-dessus de laquelle est disposée la bobine de capteur (24), de sorte qu'un couplage inductif des enroulements partiels (34a, 34b) de la bobine de capteur (24) avec la bobine d'excitateur (22), et ainsi une amplitude de la tension alternative induite dans la bobine de capteur (24), dépendent d'une position relative de l'élément coulissant (14) par rapport à l'élément de base (12) ;
**caractérisé par**
une bobine de correction (26), qui est disposée au-dessus d'une géométrie constante (42) de l'élément coulissant (14) le long de la course de mesure, de sorte qu'un couplage inductif de la bobine de correction (26), et ainsi une amplitude d'une tension alternative induite dans la bobine de correction (26), dépendent d'un décalage latéral de l'élément coulissant (14) par rapport à l'élément de base (12).

2. Capteur de course linéaire (10) selon la revendication 1,
la bobine de correction (26) possédant au moins deux enroulements partiels (36a, 36b) en sens inverse ; et/ou les enroulements partiels (36a, 36b) de la bobine de correction (26) étant disposés l'un à côté de l'autre transversalement par rapport à la course de mesure au-dessus de la géométrie constante (42) de l'élément coulissant (14).

3. Capteur de course linéaire (10) selon la revendication 1 ou 2,
la bobine de correction (26) possédant quatre enroulements partiels (36a, 36b, 36c, 36d) en sens inverse, parmi lesquels deux enroulements partiels intérieurs (36b, 36c) sont disposés au-dessus de la géométrie variable (30) et deux enroulements partiels extérieurs (36a, 36d) sont respectivement disposés au-dessus d'une géométrie constante (42) le long de la course de mesure.

4. Capteur de course linéaire (10) selon l'une des revendications précédentes,
le capteur de course linéaire (10) possédant deux bobines de correction (26, 26') ; et/ou
les deux bobines de correction (26, 26') possédant un seul enroulement.

5. Capteur de course linéaire (10) selon l'une des revendications précédentes,
le capteur de course linéaire (10) possédant deux bobines de correction (26, 26') qui, dans le cas d'une géométrie constante (42) de l'élément coulissant (14), sont respectivement disposées à gauche et à droite de la géométrie variable (30).

6. Capteur de course linéaire (10) selon l'une des revendications précédentes,
le capteur de course linéaire (10) possédant deux bobines de correction (26, 26') qui sont branchées en série ; et/ou
la bobine de correction (26, 26') et la bobine de capteur (24) étant branchées en série.

7. Capteur de course linéaire (10) selon l'une des revendications précédentes,
la bobine d'excitateur (22) étant réalisée pour induire une tension alternative dans la bobine de capteur (24) et dans la bobine de correction (26) ; et/ou
la bobine d'excitateur (22) entourant la bobine de capteur (24) et/ou la bobine de correction (26).

8. Capteur de course linéaire (10) selon l'une des revendications précédentes,
le capteur de course linéaire (10) comportant une bobine d'excitateur supplémentaire (22') pour la bobine de correction (26), laquelle est réalisée pour induire une tension alternative dans la bobine de correction (26).

9. Capteur de course linéaire (10) selon l'une des revendications précédentes,
les enroulements partiels (34a, 34b) de la bobine de capteur (24) étant disposés l'un à côté de l'autre transversalement par rapport à la course de mesure ; et/ou
les enroulements partiels (34a, 34b) de la bobine de capteur (24) possédant la même surface.

10. Capteur de course linéaire (10) selon l'une des revendications précédentes,
le capteur de course linéaire (10) possédant deux bobines de capteur (24, 24') ayant respectivement deux enroulements partiels (34a, 34b) en sens inverse ;
les deux bobines de capteur (24, 24') étant disposées l'une à côté de l'autre transversalement par rapport à la course de mesure au-dessus de la géométrie variable (30) de l'élément coulissant (14).

11. Capteur de course linéaire (10) selon l'une des revendications précédentes,
la géométrie variable (30) comportant une rainure (32) de l'élément coulissant (14) ayant un tracé en biais par rapport à la course de mesure ; et/ou
la géométrie constante (42) comportant une rainure (44) de l'élément coulissant (14) ayant un tracé parallèle à la course de mesure ; et/ou
la géométrie constante (42) comportant une arête latérale (40) de l'élément coulissant (14) ayant un tracé parallèle à la course de mesure.

12. Capteur de course linéaire selon l'une des revendications précédentes
la bobine d'excitateur (22), la bobine de capteur (24) et/ou la bobine de correction (26) étant réalisées sous la forme de bobines planes dans un circuit imprimé (20).
